Europäisches Patentamt

European Patent Office

Office européen des brevets

(19)

(11) Publication number: **0 083 846**

**A1**

(12) **EUROPEAN PATENT APPLICATION**

(21) Application number: **82306487.8**

(22) Date of filing: **06.12.82**

(51) Int. Cl.³: **F 16 K 17/16**

(30) Priority: **07.01.82 GB 8200465**

(43) Date of publication of application:
**20.07.83 Bulletin 83/29**

(84) Designated Contracting States:
**DE FR GB IT**

(71) Applicant: **ELECTROFABRICATION & ENGINEERING
COMPANY LIMITED
Gloucester Road West Chirton Industrial Estate
North Shields Tyne & Wear, NE29 8RQ(GB)**

(72) Inventor: **Falconer, John David
1 Heathfield Place Melton Park
Gosforth Newcastle upon Tyne(GB)**

(74) Representative: **Sanderson, Michael John et al,
MEWBURN ELLIS & CO 2/3 Cursitor Street
London EC4A 1BQ(GB)**

(54) **Safety pressure relief device with indicating means.**

(57) A safety pressure relief device for location on a pressure vessel includes a flow control member (18), which may be a bursting disc or a component of a valve, against the inlet face of which is applied the pressure of fluid within the vessel, and a blade-like detection member (42) located to the outlet side of the flow control member (18). The detection member (42) is mounted on one end of a carrier member (40) and has a spring-loaded operative position in which the detection member (18) lies adjacent the outlet face of the flow control member (18). On increase of pressure within the vessel, such as to move the flow control member (18), the detection member (42) and carrier member (40) are moved from their operative position to release said spring loading and to actuate associated indicating means (60) whereby said movement of the flow control member (18) can be determined.

FIG.1

EP 0 083 846 A1

- 1 -

# SAFETY PRESSURE RELIEF DEVICE WITH INDICATING MEANS

## TECHNICAL FIELD

This invention relates to safety pressure relief devices provided with indicating means, and more particularly to such devices in which a member, which may be a bursting disc or a component of a valve, is moved from an operative position preventing flow through an associated bore to a displaced position permitting said flow when the pressure applied to said member reaches a predetermined critical value, said devices being provided with means for indicating movement of said member.

## BACKGROUND ART

In use of safety pressure relief devices incorporating bursting discs, which discs may be of the forward bursting type, the reverse bursting type or flat discs of a frangible material such as graphite, bursting of the disc is normally associated with a potentially dangerous situation in that the pressure within the associated vessel has reached an undesirably high value. That the disc has burst may not be apparent, and there is therefore a need to provide means for indicating burst.

It has been proposed to provide various means for indicating burst; in one known arrangement, the electrical resistance of a loop of wire on the disc changes on burst of the disc and triggers an alarm to indicate said burst. In an alternative known arrangement, a strand of electrical wire extending across the outlet side of the disc is broken on burst of the disc, an alarm again being triggered.

Both these arrangements, being of an electrical nature, must be intrinsically safe before installation can be approved.

It is also known to provide pressure sensitive switches to the outlet side of the discs, particularly in low pressure applications in which a bursting disc is located in series with a pressure relief valve. However it has been found impractical to use such switches in the majority of devices incorporating bursting discs only, because of the nature of the fluid flow on burst.

DISCLOSURE OF THE INVENTION

According to the present invention there is provided a safety pressure relief device for location on a pressure vessel, the device comprising a flow control member to the inlet face of which is applied the fluid pressure within the vessel, and, to the outlet side of said flow control member, a substantially blade-like detection member mounted at or adjacent one end of a carrier member, said detection member having a spring loaded operative position in which it lies adjacent the outlet face of the flow control

- 3 -

member, the arrangement being such that, on movement of the flow control member due to increase in pressure within the vessel, the detection member together with the carrier member is moved to release said spring loading and to actuate associated indicating means.

Although the flow control member may be a component of a safety pressure relief valve, a preferred application of the invention is in a device in which the flow control member comprises a bursting disc the radially outer regions of which are clamped between annular inlet and outlet support means, the detection member being within the bore of the outlet support means and the carrier member extending laterally through said outlet support means.

In the cases of forward bursting discs and flat graphite-type discs, movement of the detection member from its operative position to its displaced position is effected by the flow of fluid under pressure from the vessel on bursting of the disc, In the case of a reverse bursting disc, however, initial movement of the detection member is normally effected by physical contact of the reversing dome portion of the disc with said member. Thus it will be appreciated that, in a device incorporating a reverse bursting disc, premature

- 4 -

reversal of the disc, as well as burst of the disc, can be detected.

Conveniently the detection member comprises a curved length of thin-section material, such as stainless steel, the curvature of which is substantially the same as that of the bore in the outlet support means, said member substantially overlying a region of the disc immediately radially inwardly of said radially outer region of the disc, with the free end of said detection member located closely adjacent the disc.

The carrier member may comprise a spindle extending substantially radially through, to be rotatable in, the outlet support means, the other end of the detection member being secured to the end of said spindle within the outlet support means.

In a preferred embodiment, the end of the spindle outside the outlet support means is received within a fixed body member, said spindle, as well as being rotatable in the outlet support means and the body member, being axially movable relative thereto.

Conveniently spring-loading of the detection member is achieved by axial movement of the spindle radially inwardly of the outlet support means against the bias of a coil spring, followed by rotation of said spindle to bring the detection member

- 5 -

into its operative position, the spindle and detection member being held in said operative position by retaining means reacting between the spindle and the body member.  On movement of the detection member from its operative position to its displaced position as a result of flow of fluid from the pressure vessel or contact by the flow control member, the spindle is rotated to disengage said retaining means whereby the coil spring urges said spindle radially outwardly of the outlet support means to actuate the indicating means.

Preferably said indicating means comprise an electrical switch, conveniently a snap-action micro-switch, mounted on the body member, said switch including an operating button located adjacent the outer end of the spindle for depression by said spindle on said radially outward movement thereof.

BRIEF DESCRIPTION OF THE DRAWINGS

Fig. 1 is a vertical section through a device according to the invention incorporating a forward bursting disc;

Figs. 2 and 3 show the detection member and retaining means of the device of Fig. 1 with the detection member in its operative position and displaced position respectively;

Fig. 4 is a plan view of the detection member of

- 6 -

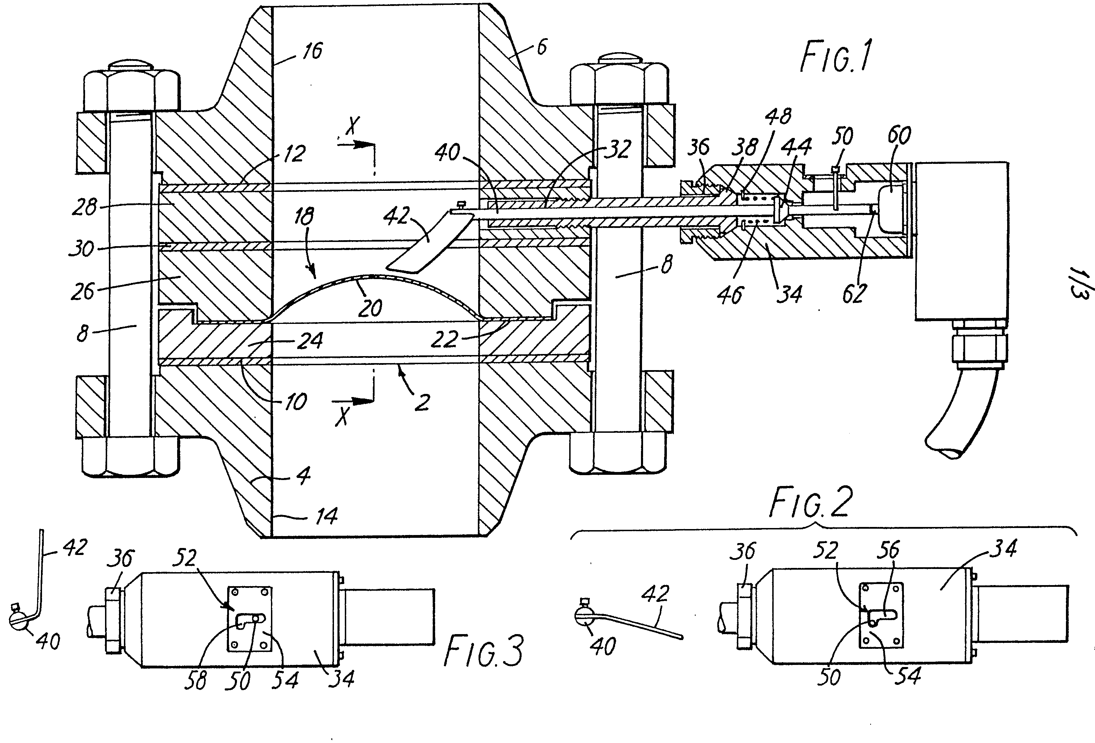

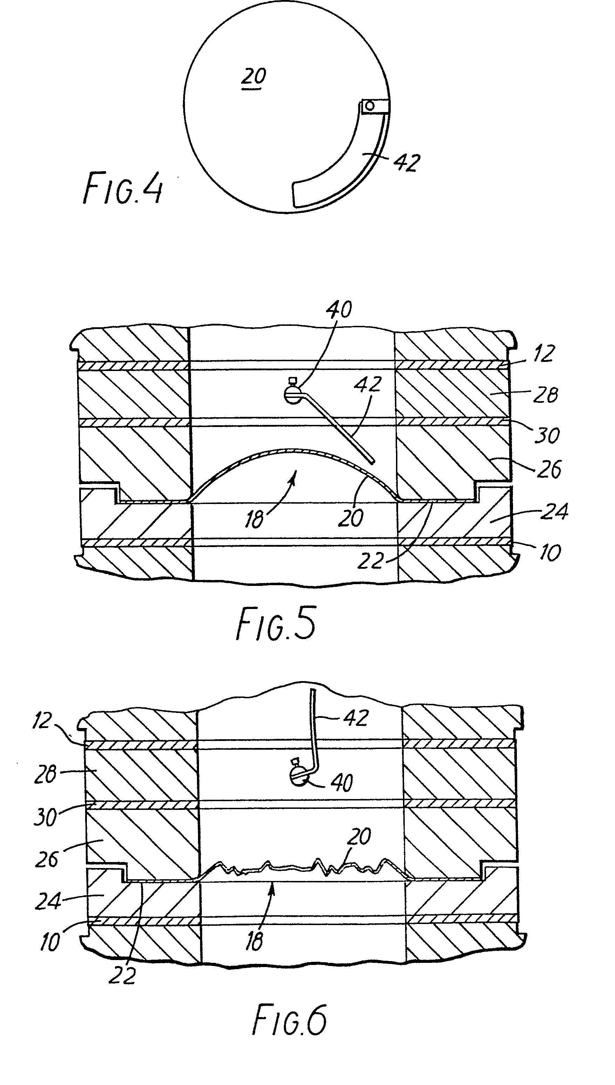

Figs. 1 and 2 in its operative position;

Figs. 5 and 6 are sections on the line X-X of Fig. 1 before and after burst of the disc respectively;

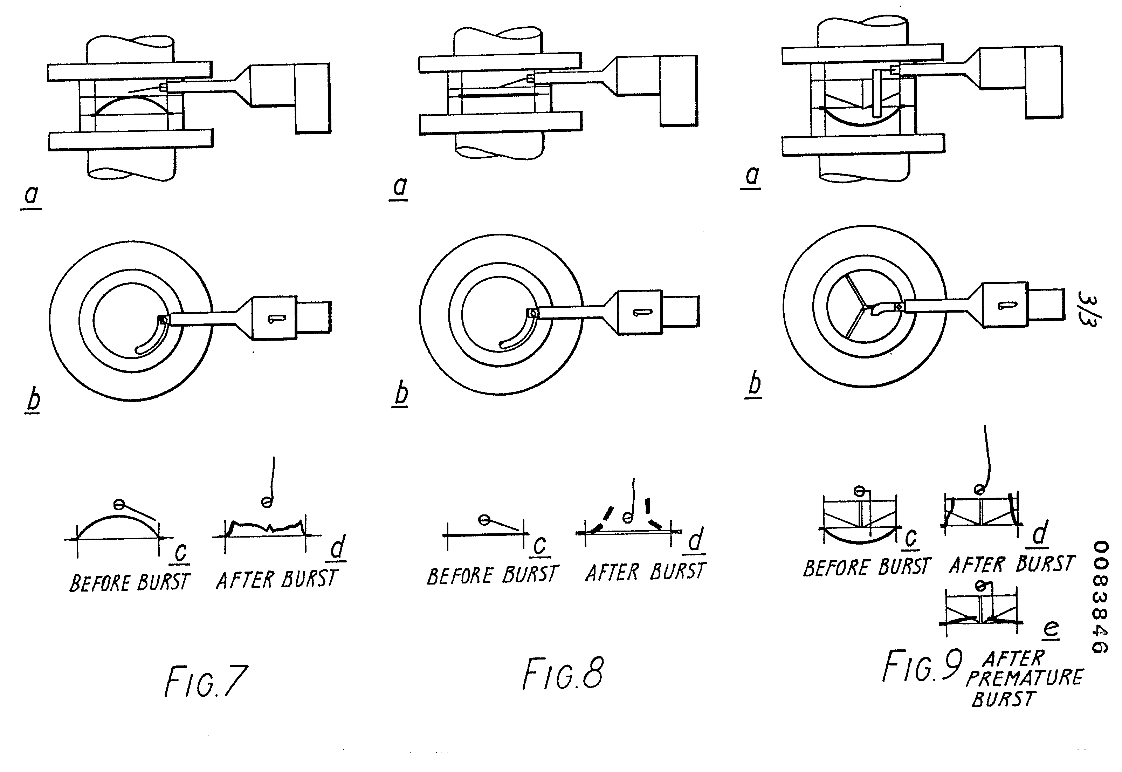

Figs 7a,8a and 9a are schematic vertical sections through devices according to the invention incorporating a forward bursting disc, a flat bursting disc and a reverse bursting disc respectively;

Figs. 7b,8b and 9b are schematic plan views of the devices of Figs. 7a,8a and 9a respectively;

Figs. 7c,8c and 9c show the discs of Figs. 7a, 8a and 9a respectively before burst;

Figs, 7d,8d and 9d show the discs of Figs. 7a, 8a and 9a after burst, and

Fig. 9e shows the disc of Fig. 9a after premature burst.

BEST MODES OF CARRYING OUT THE INVENTION

Referring to Figs. 1 to 6, there is shown a safety pressure relief device indicated generally at 2 clamped between inlet and outlet pipe flanges 4,6 respectively by means of bolts 8, gaskets 10,12 reacting between the flanges 4,6 and the inlet and outlet faces of the device 2 respectively. Fluid within a pressure vessel (not shown) is present in the bore 14 through the flange 4, the device 2 normally preventing flow of said fluid to the bore 16 through the flange 6.

- 7 -

The device 2 includes a forward bursting disc 18 comprising a concave-convex dome portion 20 surrounded by an annular flange portion 22. Said flange portion 22 is clamped between inlet and outlet support portions 24, 26 respectively of an annular holder member with the concave face of the disc subjected to the fluid pressure in the associated vessel.

The support means for the disc 18 to the outlet side thereof are completed by an annular member 28, a sealing gasket 30 being located between said member 28 and the portion 26 of the holder member. Formed in said member 28 is a threaded radial bore into which is screwed one end of a hollow support tube 32, said tube extending radially outwardly from the member 28 as best seen in Fig. 1. The other end of the tube 32 is secured in, in sealing relationship with, a body member 34, said securing being achieved by means of an externally threaded nut 36 received within a correspondingly-threaded bore in the body member 34 and reacting against an increased-diameter end portion 38 on the tube 32, a tapered surface on said end portion 38 thus being urged against a correspondingly-tapered surface in the body member 34.

A spindle 40 is mounted in the tube 32 and body member 34 to be rotatable therein as well as axially

- 8 -

movable relative thereto as will be described below. One end of the spindle 40 projects into the bore of the annular member 28 while the other end of the spindle lies within the end of the body member 34 remote from the nut 36, again as best seen in Fig. 1.

Attached to said one end of the spindle 40 is a flat blade 42 of thin-section strip material such as 0.25mm thick stainless steel, said blade being of generally arcuate shape as shown in Fig. 4. To the intermediate regions of the spindle 40, within the body member 34, is attached a conical abutment portion 44 the tapered face of which can seat against a correspondingly-shaped seating within said body member 34. A coil spring 46 reacts between the flat base of said abutment portion 44 and a fixed annular plate 48 within the body member 34 to urge the spindle radially outwardly of the annular member 28 and effect a seal between said abutment portion 44 and said seating in the body member.

A pin 50 is fixed into the spindle at a point axially outwardly of the conical abutment portion 44 to extend radially from said spindle through a slot 52 in a plate 54 mounted to the top face of the body member 34. The slot 52 comprises perpendicular extents 56,58, one directed axially of the spindle 40 and the other radially of the spindle as best seen in Figs. 2 and 3.

The operative position of the device is achieved by moving the pin 50 inwardly along the extent 56 of the slot 52 to move the spindle 40 against the bias of the spring 46, and then moving the pin 50 along the extent 58 of the slot 52 to the position shown in Fig. 2, thus rotating the spindle 40 to bring the blade 42 into the operative position shown in Figs. 1,2,4 and 5. In this position, the blade 42 overlies an arcuate portion of the radially outer regions of the dome portion 20 of the disc with the free end of said blade lying closely adjacent said dome portion 20.

A snap-action electric microswitch 60 includes an operating button 62, said switch being mounted to said end of the body member 34 remote from the nut 36 with the button 62, in its inoperative position protruding from the switch, lying closely adjacent the other end of the spindle 40.

On rupture of the disc 18 due to the pressure in the associated vessel reaching the critical value of the disc, a pressure wave of fluid is released from the vessel through the ruptured disc, which wave impinges upon the blade 42 and rotates said blade and spindle 40 such that the pin 50 is moved from the extent 58 of the slot 52 into the extent 56. The spring 46 then urges the spindle 40 and attached blade radially outwardly of the member 28 into the displaced position of Figs. 3 and 6. A seal is thus effected between the conical abutment portion 44 and the seating within the body member 34, while axial movement of the other end of the spindle 40 results in depression of the operating button 62 and actuation of the switch 60 and associated alarm or indicating device (not shown). Continued flow of the released fluid straightens the blade 42 along the direction of flow as seen in Figs. 3 and 6 whereby restriction in the flow path is reduced to a minimum.

Thus a positive indication of burst is given, after which the disc 18 is replaced, a new blade 42 is fitted and the device is reset to the operative position with the spindle 40 cocked against the spring 46.

The microswitch 60 can be such as to be usable in hazardous conditions, while the indicating means operated by the switch can be chosen to suit particular requirements and may be audible and/or visible. Further, the microswitch 60 may be used to operate directly equipment such as a pressure pump.

With conventional forward bursting metal discs or with flat composite or graphite discs (Figs, 7 and 8 respectively) rotation of the blade 42 on burst is effected by fluid flow. In the case of reverse bursting

- 11 -

discs (Fig. 9), rotation of the blade 42 results from contact by the reversing dome portion of the disc, said blade subsequently being straightened to the position shown in Fig. 9d by the fluid flow. Thus it will be appreciated that premature reversal of the dome portion of the disc - i.e. reversal which occurs below the critical pressure of the disc - whether accompanied by complete burst or not, can be detected by the arrangement of the invention (see Fig. 9e).

Thus there is provided a safety pressure relief device which does not rely on a change in electrical resistivity to indicate burst, does not use pressure sensitive switches to detect burst and which can, without modification, be used with all the different types of bursting discs currently available.

Although described in relation to devices incorporating bursting discs as the flow control members, the invention is equally applicable to, for example, safety pressure relief valves in which a component of the valve is moved from an operative position closing a fluid flow path to a displaced position permitting flow along said path when a predetermined pressure situation arises within the valve.

- 12 -

CLAIMS

1. A safety pressure relief device for location on a pressure vessel, the device comprising a flow control member (18) to the inlet face of which is applied the fluid pressure within the vessel, and characterised by, to the outlet side of said flow control member (18), a substantially blade-like detection member (42) mounted at or adjacent one end of a carrier member (40), said detection member (42) having a spring-loaded operative position in which it lies adjacent the outlet face of the flow control member (18), the arrangement being such that, on movement of the flow control member (18) due to increase in pressure within the vessel, the detection member (42) together with the carrier member (40) is moved to release said spring-loading and to actuate associated indicating means (60).

2. A safety pressure relief device as claimed in claim 1 in which the flow control member comprises a bursting disc (18) the radially outer regions (22) of which are clamped between inlet and outlet support means (24,26,28), the detection member (42) being within the bore of the outlet support means (26,28) and the carrier member (40) extending laterally through said outlet support means (26,28).

3. A safety pressure relief device as claimed in claim 2 in which the detection member comprises a curved length of thin-section material (42), the curvature of which is substantially the same as that of the bore in the inlet support means (26,28), said member (42) substantially overlying a region of the disc (18) immediately radially inwardly of said radially outer region (22) of the disc (18), with the free end of said detectiom member (42) located closely adjacent the disc (18).

4.    A safety pressure relief device as claimed in claim 2 or claim 3 in which the carrier member comprises a spindle (40) extending substantially radially through, to be rotatable in, the outlet support means (26,28), the other end of the detection member (42) being secured to the end of said spindle (40) within the outlet support means (26,28).

5.    A safety pressure relief device as claimed in claim 4 in which the end of the spindle (40) outside the outlet support means (26,28) is received within a fixed body member (34), said spindle (40), as well as being rotatable in the outlet support means (26,28) and the body member (34), being axially movable relative thereto.

6.    A safety pressure relief device as claimed in claim 5 in which spring-loading of the detection member (42) is achieved by axial movement of the spindle (4) radially inwardly of the outlet support means

- 14 -

(26,28) against the bias of a coil spring (46), followed by rotation of said spindle (40) to bring the detection member (42) into its operative position, the spindle (40) and detection member (42) being held in said operative position by retaining means (50,52) reacting between the spindle (40) and the body member (34), the arrangement being such that, on movement of the detection member (42) from its operative position to its displaced position as a result of flow of fluid from the pressure vessel or contact by the flow control member (18), the spindle (40) is rotated to disengage said retaining means (50,52) whereby the coil spring (46) urges said spindle (40) radially outwardly of the outlet support means (26,28) to actuate the indicating means (60).

7. A safety pressure relief device as claimed in claim 6 in which the indicating means comprises an electrical snap-action microswitch (60) mounted on the body member (34), said switch including an operating button (62) located adjacent the outer end of the spindle (40) for depression by said spindle (40) on said radially outward movement thereof.

FIG.4

FIG.5

FIG.6

_a_

_b_

BEFORE BURST _c_   AFTER BURST _d_

FIG.7

_a_

_b_

BEFORE BURST _c_   AFTER BURST _d_

FIG.8

_a_

_b_

BEFORE BURST _c_   AFTER BURST _d_

_e_

FIG.9 AFTER PREMATURE BURST

3/3

0083846

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 631 100 (GERDTS) <br> * Figure 1 * | 1 | F 16 K 17/16 |
| A | DE-B-2 121 160 (HUBER) | | |
| A | US-A-3 709 239 (MORCK) | | |
| A | DE-A-2 056 167 (INTERATOM) | | |
| A | US-A-2 263 840 (FRANCK) | | |

TECHNICAL FIELDS SEARCHED (Int. Cl. 3)

F 16 K 17/00
F 16 K 37/00

The present search report has been drawn up for all claims

| Place of search <br> BERLIN | Date of completion of the search <br> 11-03-1983 | Examiner <br> SCHLABBACH M |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82